# EUROPEAN PATENT SPECIFICATION

(11) **EP 1 218 663 B1**
(45) Date of publication and mention of the grant of the patent: **07.12.2005**
(21) Application number: 00961644.2
(22) Date of filing: 08.09.2000
(51) Int. Cl.: F21V 8/00, G02F 1/1335

(54) **DISPLAY ILLUMINATION DEVICE AND METHOD OF ENHANCING BRIGHTNESS IN A DISPLAY ILLUMINATION DEVICE**
BELEUCHTUNGS ANZEIGE VORRICHTUNG UND VERFAHREN ZUR HELLIGKEITSSTEIGERUNG IN BELEUCHTUNGSANZEIGEVORRICHTUNG
DISPOSITIF D'ECLAIRAGE D'ECRAN ET PROCEDE PERMETTANT D'AMELIORER LA LUMINOSITE DANS LEDIT DISPOSITIF

(30) Priority: 08.10.1999 US 415100
(43) Date of publication of application: 03.07.2002
(73) Proprietor: 3M Innovative Properties Company, St. Paul, MN 55133-3427 (US)
(72) Inventor: KRETMAN, Wade, D., Saint Paul, MN 55133-3427 (US); COBB, Sanford, Saint Paul, MN 55133-3427 (US); EPSTEIN, Kenneth, A., Saint Paul, MN 55133-3427 (US); GARDINER, Mark, E., Saint Paul, MN 55133-3427 (US); WORTMAN, David, L., Saint Paul, MN 55133-3427 (US)
(74) Representative: Vossius & Partner
(86) International application number: PCT/US2000/024590
(87) International publication number: WO 2001/027528

(56) References cited:
- EP-A- 0 597 261
- EP-A- 0 936 492
- WO-A-95/27915

## Description

### BACKGROUND OF THE INVENTION

### Field of the Invention

The invention relates generally to display illumination devices suitable for use in passive displays and more particularly to a backlight illumination.device and a method of enhancing brightness in an illumination device.

### Description of the Related Technology

EP-A-1 173 783 (WO-A-00/65385) is prior art under Art. 54(3) EPC only, and to be disregarded with respect to the Contracting State Spain under Art. 54(4) EPC, EP-A-1 173 783 (WO-A-00/65385) mentions on page 19, lines 21 -24 reflective polarizer or cholesteric polarizer in the context of contrast enhancing filters.

EP-A-0 597 261 relates to an illumination device having a light guide, a light source, a polarized light separating sheet, and a light reflecting sheet.

Backlit display devices, such as liquid crystal display (LCD) devices, commonly use a wedge-shaped lightguide. The wedge-shaped lightguide couples light from a substantially linear source, such as a cold cathode fluorescent lamp (CCFL), to a substantially planar output. The planar output is then coupled to the LCD.

The performance of a display device is often judged by its brightness. From a subjective standpoint relatively small increases in overall brightness are not easily perceived by the end user of the display device, but it is possible to measure relatively small increases in brightness objectively. While not directly appreciated by the end user, a display with an objectively measured increase in overall brightness of only a small percentage, for example, perhaps as little as 1 percent, is perceived as being significantly better by the designer of the product using the display. This is because the designer can allocate less power to the display device, yet still achieve an acceptable level of brightness. For battery powered, portable devices, this translates to longer running times.

The alternatives for increasing display brightness include using more or brighter light sources. Counter to the ability to decrease the power allocation to the display device, additional light sources and/or brighter light sources consume more energy, which for portable devices this correlates to decreased battery life. Also, adding light sources to the device may increase the product cost and can lead to reduced reliability of the device.

Brightness is also enhanced by more efficiently using the light that is available within the display device, i.e., to direct more of the available light within the display along a preferred viewing axis. A number of mechanisms have been employed within display devices to improve display device efficiency. For example, brightness enhancing films having prismatic structures are frequently used to direct light that would otherwise not be viewed along the viewing axis. A typical flat panel display device may use several different films to provide an overall bright, high contrast display with substantially uniform output along the preferred viewing directions. Surface diffusers or bulk diffusers are sometimes used to mask defects in the output of the lightguide, but most diffusers scatter light from the viewing axis and therefore reduce on-axis brightness.

Lightguide improvements have also contributed to improved brightness in display devices. Typical lightguides extract light by diffusion and may be enhanced by geometric recycling. Light rays entering the lightguide encounter diffusing elements, typically a pattern of white dots applied to a surface of the lightguide, and are diffusively extracted by scattering from the lightguide. Other light rays are totally internally reflected within the lightguide until encountering a diffusing element. Losses are encountered in these processes, and because the light is diffusely extracted, without any collimation, on-axis brightness is lower. With enhancement, the diffuse light rays may be directed more on axis, in a quasi-collimation process, which results in enhanced on-axis brightness.

Another method of extracting light from a lightguide is by use of frustrated total internal reflection (TIR). In one type of frustrated TIR the lightguide has a wedge shape, and light rays incident on a thick edge of the lightguide are totally internally reflected until achieving critical angle relative to the top and bottom surfaces of the lightguide. These sub-critical angle light rays are then extracted, or more succinctly refract from the lightguide, at a glancing angle to the output surface. To be useful for illuminating a display device, these light rays must then be turned substantially parallel to a viewing, or output, axis of the display device. This turning is usually accomplished using a turning lens or turning film.

A turning lens or turning film typically includes prism structures formed on an input surface, and the input surface is disposed adjacent the lightguide. The light rays exiting the lightguide at the glancing angle, usually less than 30° to the output surface, encounter the prism structures. The light rays are refracted by a first surface of the prism structures and are reflected by a second surface of the prism structures such that they are directed by the turning lens or film in the desired direction, e.g., substantially parallel to a viewing axis of the display.

Lightguides, and their corresponding illumination systems, that operate using the principle of frustrate TIR are often referred to as one-pass backlights. This is because the light exiting the lightguide is not redirected back to the lightguide as is done in a recycling lightguide. Recycling lightguides generally extract light by diffuse reflection from a carefully designed pattern of diffuse dots formed on to the bottom surface of the lightguide. Behind the pattern a diffuse, but highly reflective sheet, is placed, but is not laminated. Above the lightguide (toward the LC module) is placed a diffuse sheet and potentially the afore-mentioned optical films for directing the light rays along the preferred viewing axis and to control the polarization of the light. Light rays that do not exit at the proper angle and/or of the wrong polarization are generally reflected back into the lightguide, where they scatter and change polarization as a result of encountering either the diffuse pattern and/or the back side reflector. This reflection, or recycling of light rays, causes the cavity to become brighter, as more light rays of the proper angle orientation and polarization are emitted.

### SUMKARY OF THE INVENTION

In accordance with the invention, an illumination system including a lightguide that operates under the principle of frustrate total internal reflection includes optical elements and combinations of optical elements for enhancing the apparent brightness of the lightguide.

The invention relates to an illumination device includes a light source and a lightguide coupled to the light source. The lightguide is arranged to extract light by frustrated total internal reflection. A turning film is coupled to an output of the lightguide and is arranged to redirect the light rays from the output surface of the lightguide through the turning film. An optical element is coupled to the turning film, and the optical element includes an optical structure that transmits light rays having a first characteristic and reflects light rays having a second characteristic. A reflector is coupled to a back surface of the lightguide, and lights rays having the second characteristics are reflected by said optical element through the turning film and into the lightguide, and at least a portion of said reflected light rays reemerge from the lightguide having the first characteristic.

The invention further related to a display device includes a liquid crystal display module. A diffuser is coupled to the liquid crystal display module, and a reflective polarizer is coupled to an input of the diffuser. A turning film is coupled to an input of the reflective polarizer and to a lightguide. The lightguide operates under the principle of frustrate total internal reflection for directing light rays from a light source through a output surface. A reflector is coupled to a back surface of the lightguide. The reflective polarizer transmits light rays having a first polarization and reflects light rays having a second polarization. The reflected light rays are reflected through the turning film and into the lightguide, and at least a portion of the reflected light rays are reflected by the reflector at the back surface and reemerge from the lightguide having the first polarization.

According to the invention, an illumination device is provided as defined in claims 1, 9 and 15 for DE, FR, GB and NL (Germany, France, Great Britain and Netherlands) and as defined in claim 1 for ES (Spain) and a display device is provided as defined in claims 13, 14, 17 and 20 for Spain.

In still another aspect of the invention according to claim 23 for Spain, a method of enhancing brightness in a display device, wherein the display device includes a liquid crystal display assembly and an illumination source, and the illumination source has a lightguide that extracts light rays according to the principle of frustrate total internal reflection, includes the steps of injecting light rays having a first polarization orientation and a second polarization orientation into the lightguide at an input surface; providing a combined optical element between the liquid crystal display assembly and the illumination source; using the combined optical element to: (a) turn light rays exiting an output surface of the lightguide to a direction substantially normal to the output surface; (b) transmit light rays having the first polarization orientation; (c) reflect light rays having the second polarization orientation back toward the lightguide; (d) randomize the reflected light rays to produce a portion of the reflected light rays having the first polarization orientation; and (e) transmit the portion of light rays.

### BRIEF DESCRIPTION OF THE DRAWINGS

The present invention is specified in the claims.

The many advantages and features of the present invention will become apparent to one of ordinary skill in the art from the following detailed description of several preferred embodiments of the invention with reference to the attached drawings wherein like reference numerals refer to like elements throughout and in which:
Fig. 1 is a schematic illustration of a display device;
Fig. 2 is a schematic illustration of a display device;
Fig. 3 is a perspective view of reflective polarizer suitable for use in the display device illustrated in Fig. 2;
Fig. 4 is a perspective view of an alternative reflective polarizer suitable for use in the display device illustrated in Fig. 2;
Fig. 5 is a schematic illustration of an illumination device adapted in accordance with an alternate embodiment of the invention;
Fig. 6 is a schematic illustration of an illumination device adapted in accordance with an alternate embodiment of the invention;
Fig. 7 is a schematic illustration of an illumination device adapted in accordance with an alternate embodiment of the invention;
Fig. 8 is a schematic illustration of an illumination device; and
Fig. 9 is a schematic illustration of an illumination device.

### DETAILED DESCRIPTION OF THE PREFERRED EMBODIMENTS

The present invention is described in terms of several preferred embodiments, and particularly, in terms of a turning film suitable for use in a backlit illumination device typically used in flat panel display devices, such as a laptop computer display or a desktop flat panel display. The invention, however, is not so limited in application and one of ordinary skill in the art will appreciate that it has application to virtually any optical system, for example, to projection screen devices and flat panel televisions. Therefore, the preferred embodiments described herein should not be taken as limiting of the broad scope of the invention.

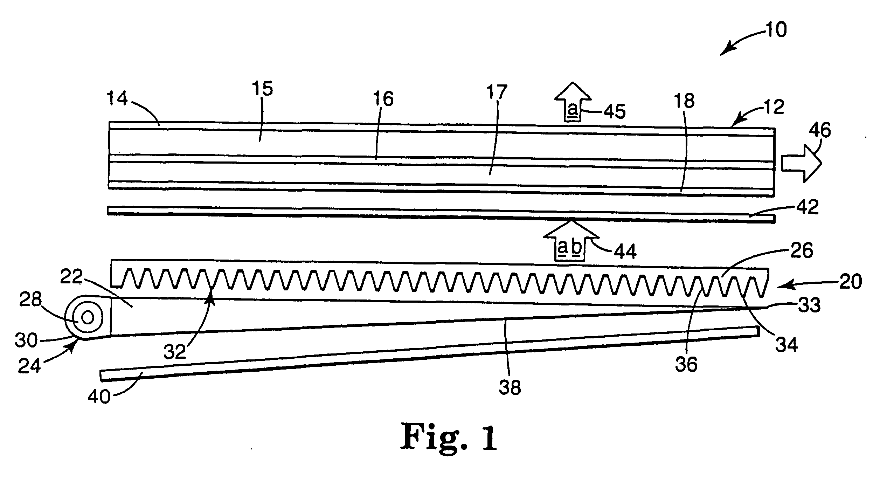

With reference to Fig. 1, a display 10 is illustrated with a multilayer liquid crystal display assembly 12, which may include a front polarizer 14, a glass layer 15, a liquid crystal layer 16, a glass layer 17 and a rear polarizer 18. The display 10 may also include a display illumination device 20 that has a lightguide 22, a light source assembly 24 and a turning film 26. The light source assembly 24 may include a cold cathode fluorescent tube (CCFT) light 28 disposed within a reflector housing 30 adjacent an input surface 32 of the lightguide 22.

The turning film 26 has an input surface 34 formed with a plurality of prism structures 36 disposed toward an output surface 36 of the lightguide 22. Disposed adjacent a back surface 38 of the lightguide 22 is a reflector 40. A diffuser 42 may be disposed between the turning film 26 and the display assembly 12 to masks defects or non-uniformities. The lightguide 22 itself may be a wedge or slab and/or modifications of each.

The edge-coupled light propagates from the input surface 32 toward an end surface 33, confined by TIR. The light is extracted from the lightguide 22 by frustration of the TIR. A ray confined within the lightguide 22 increases its angle of incidence relative to the plane of the top and bottom walls, due to the wedge angle, with each TIR bounce. Thus, the light eventually refracts out of each of the output surface 36 and the back surface 38 because it is no longer contained by TIR. The light refracting out of the back surface 38 is either specularly or diffusely reflected by the reflector 40 back toward and largely through the lightguide 22. The turning film 26 is arranged to redirect the light rays exiting the output surface 36 along a direction substantially parallel to a preferred viewing direction. The preferred viewing direction may be normal to the output surface 36, but will more typically be at some angle to the output surface 36.

The light rays exiting the turning film 26 are generally illustrated by ray bundle 44 having light rays of a first polarization orientation (a) and a second polarization orientation (b). These light rays are diffused upon passing through the diffuser 42 and enter the display assembly 12. By normal operation of the display assembly 12, the light rays having the first polarization orientation (a) are transmitted (arrow 45) by the display assembly 12 while the light rays having the second polarization orientation (b) are absorbed, which is indicated by the arrow 46 exiting from the side of the display assembly 12. Therefore, assuming no losses within display 10, by design only half of the available light rays entering the lightguide reach the viewer.

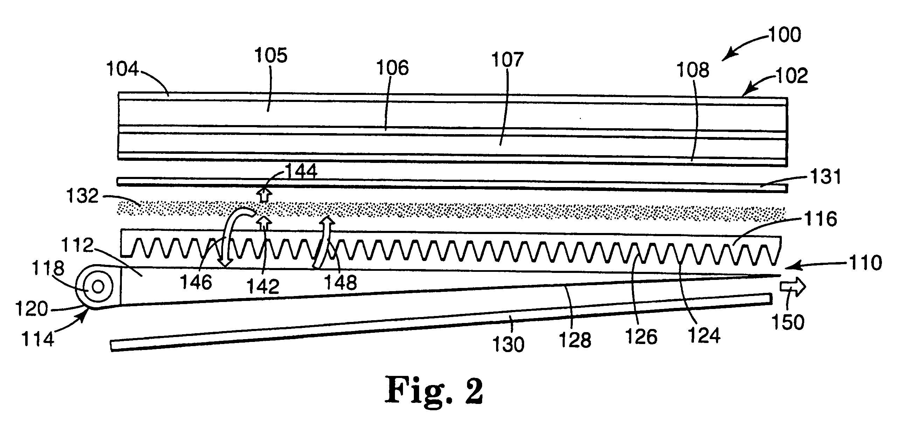

With reference now to Fig. 2, a display 100 is illustrated with a multilayer liquid crystal display assembly 102, which may include a front polarizer 104, a glass layer 105, a liquid crystal layer 106, a glass layer 107 and a rear polarizer 108. The display 100 also includes a display illumination device 110 that has an lightguide 112, a light source assembly 114 and a turning film 116. The light source assembly may include a cold cathode fluorescent tube (CCFT) light 118 disposed within a reflector housing 120 adjacent an input surface 122 of the lightguide 112.

The turning film 116 has an input surface 124 formed with a plurality of prism structures 126 disposed toward an output surface 126 of the lightguide 112. Disposed adjacent a back surface 128 of the lightguide 112 is a reflector 130. A diffuser 131 is disposed between the turning film 116 and the display 102 to masks defects or non-uniformities.

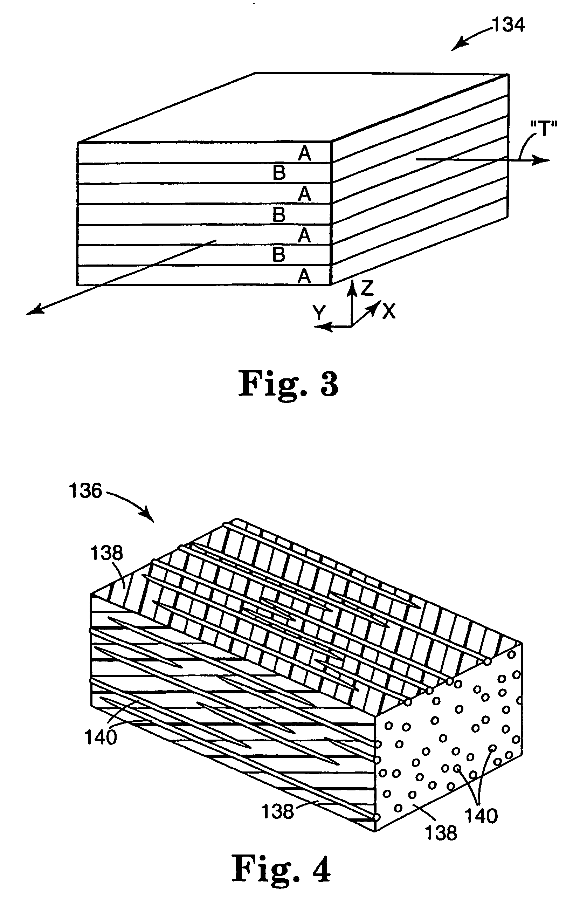

The display 100 may further include a reflective polarizer 132 disposed between the turning film 116 and the display assembly 102. The reflective polarizer 132 may be a multilayer reflective polarizer 134 as shown in Fig. 3, or may be a continuous reflective polarizer 136 constructed from a substantially birefringent continuous phase including dispersed therein a substantially non-birefringent disperse phase disposed therein as shown in Fig. 4. The reflective polarizer 132 may further be a cholesteric polarizer or a birefringent film retarder.

Referring first to Fig. 3, the illustrative multilayer reflective polarizer 134 is made of alternating layers (ABABAB...) of two different polymeric materials. These are referred to as material "A" and material "B" throughout the following discussion. The two materials may be extruded together and the resulting multiple layer (ABABAB...) material stretched approximately 5:1 along one axis (illustrated as "X"), and not stretched appreciable 1:1 along the other axis (illustrated as "Y"). The X axis is referred to as the "stretched" direction and the Y axis is referred to as the "transverse" direction.

The B material may have a nominal index of refraction (n=1.64 for example) which is not substantially altered by the stretching process. The A material has the property of having the index of refraction altered by the stretching process. For example, a uniaxially stretched sheet of the A material will have one index of refraction (n=1.88 for example) associated with the stretched direction and a different index of refraction (n=1.64 for example) associated with the transverse direction. By way of definition, the index of refraction associated with an in-plane axis (an axis parallel to the surface of the film) is the effective index of refraction for plane polarized incident light whose plane of polarization is parallel to that axis.

Thus, after stretching the multilayer stack (ABABAB...) the material shows a large refractive index difference between layers (delta n=1.88-1.64=0.24) associated with the stretched direction. While in the transverse direction, the associated indices of refraction between layers are essentially the same (delta n=1.64-1.64=0.0). These optical characteristics cause the multilayer laminate to act as a reflecting polarizer that will transmit the polarization component of the incident light that is correctly oriented with respect to the transmission axis (illustrated as "T"). The light that emerges from the reflective polarizer 132 is referred to as having a first polarization orientation (a).

The light that does not pass through the reflective polarizer 132 has a polarization orientation (b) that differs from the first polarization orientation (a). Light exhibiting this polarization orientation will encounter the index differences which result in reflection of this light. The structure and function of multilayer reflective polarizer 132 is more fully described in commonly assigned United States Patent No. 5,828,488.

Referring to Fig. 4, reflective polarizer 136 may include a substantially continuous matrix 138 of a birefringent material into which is disposed a discontinuous or disperse phase 140. The birefringence of the continuous phase is typically at least about 0.05 and may be between about 0.1-0.2. The indices of refraction of the continuous and disperse phases are substantially matched (i.e., differ by less than about 0.05) along a first of three mutually orthogonal axes, and are substantially mismatched (i.e., differ by more than about 0.05) along a second of the three mutually perpendicular axes. The indices of refraction along the match axis should differ by less than about 0.01-0.03, while the indices of refraction along the mismatch axis should differ by more than at least 0.07 and preferably in excess of 0.2.

The mismatch in refractive indices along a particular axis has the effect that incident light polarized along that axis will be substantially scattered resulting in a significant amount of reflection. By contrast, incident light polarized along an axis in which the refractive indices are matched will be spectrally transmitted or reflected to a much lesser degree.

The disperse phase 140 may have an oriented rod-like geometry as shown in Fig. 4, although other geometries may be utilized. One method for forming the structure shown is to form the continuous phase 138 into which are included spherical particles of the disperse phase 140 into a film, and then stretching the film along one axis to orient and extend the spherical particles into the rod-like structures shown. It may also be possible to extrude the components to form both the continuous phase 138 and the disperse phase 140. The structure and function of reflective polarizer 136 is more fully described in commonly assigned United States Patent No. 5,783,120.

Referring again to Fig. 2, the lightguide 112 may extract light by the principle of frustrated total internal reflection as described above. The light rays exiting the output surface of the lightguide 112 are turned by the turning film 116 substantially along a preferred viewing direction of the display 102.

The light rays exiting the turning film 116 are generally illustrated by ray bundle 142, are randomly polarized, and for example, contain light rays of the first polarization orientation (a) and the second polarization orientation (b). The light rays of the first polarization orientation (a) are transmitted by the reflective polarizer 132. These light rays are illustrated by ray bundle 144. The light rays having the second polarization orientation (b) are reflected back towards the turning film 116 and the lightguide 112 and are represented by ray bundle 146.

The light rays contained in ray bundle 146 will re-enter the lightguide 112 and be reflected by reflector 130 with some portion of this light being randomized in terms of both direction and polarization. Thus, a portion of these light rays will reemerge from the lightguide having the first polarization orientation (a) and are illustrated by ray bundle 148. The light rays of the ray bundle 148 add to the light rays of the ray bundle 144 adding to the overall apparent brightness of the display 100. Some absorption losses occur, and are illustrated by the ray bundle 150, however, because of the reflective polarizer 132, very few of the light rays exiting the lightguide 112 are absorbed by the dichroic absorptive polarizer 108.

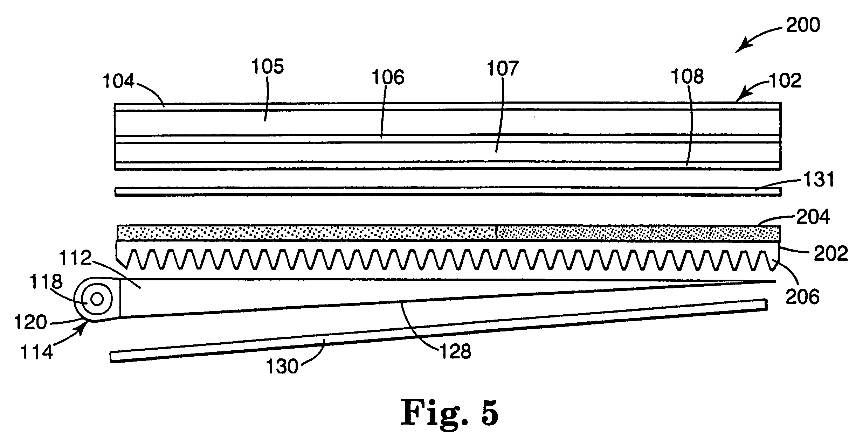

Fig. 5 shows a display 200 similar in construction to the display 100. Like reference numerals are used to illustrate like elements of both the display 100 and the display 200.

As shown in Fig. 5, the turning film 116 and the reflective polarizer 132 are replaced by the combined turning film/reflective polarizer 202. The combined turning film/reflective polarizer 202 may be formed by lamination of a reflective polarizer 204, such as the reflective polarizer 132, to a turning film 206, such as the turning film 116. Alternatively, beginning with a reflective polarizer, the turning film structure may be formed directly onto the reflective polarizer using radiation or ultraviolet (UV) curing processes. It is further possible to form the turning prism structure by embossing a skin surface portion of the reflective polarizer.

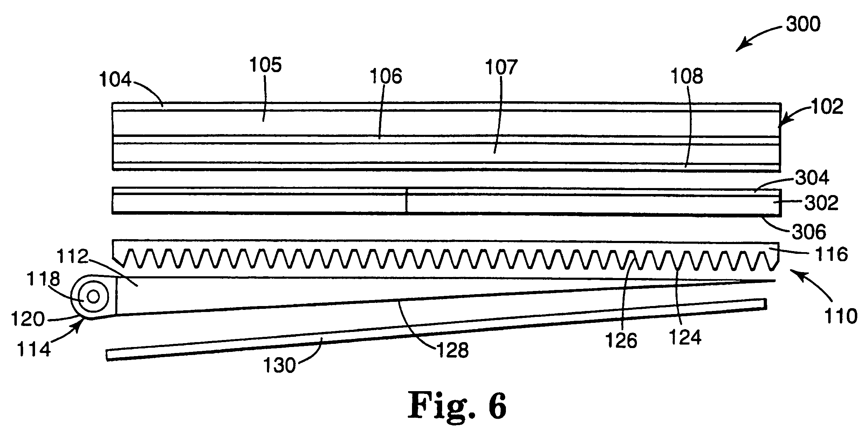

Fig. 6 shows a display 300 similar in construction to the display 100. Like reference numerals are used to illustrate like elements of both the display 100 and the display 300.

In Fig. 6, the reflective polarizer 132 and the diffuser 131, as described in connection with Fig. 2, are replaced by the combined diffuser/reflective polarizer 302. The combined diffuser/reflective polarizer 302 may be formed by lamination of a reflective polarizer 306, such as the reflective polarizer 132, to a diffuser 304, such as the diffuser 131. As described above, various alternative manufacturing methods, such UV curing or embossing may also be used to form the combined diffuser/reflective polarizer 302. The diffusive properties of the diffuser/reflective polarizer 302 may also be established by the inclusion of diffusive particles in an outer layer of the reflective polarizer or by providing a coating of diffusive particles onto the reflective polarizer.

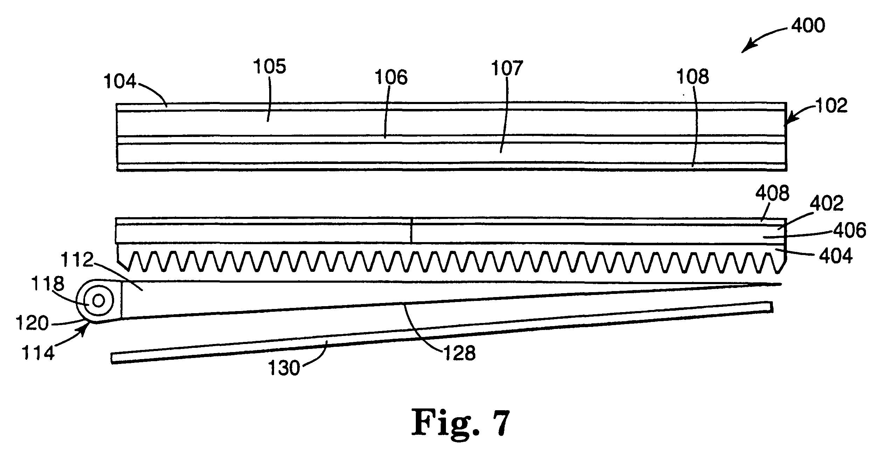

Fig. 7 shows a display 400 similar in construction to the display 100. Like reference numerals are used to illustrate like elements of both the display 100 and the display 400.

In Fig. 7, the turning film 116, the reflective polarizer 132 and the diffuser 131, as illustrated in Fig. 2, are replaced by the combined element 402. The combined element 402 may be formed by laminating together a turning film 404, such as turning film 116, a reflective polarizer 406, such as the reflective polarizer 132, and a diffuser 408, such as the diffuser 131. The combined element 402 may also formed using UV or radiation curing techniques to form the turning prism structures wherein the skin material further contains bulk diffusing material.

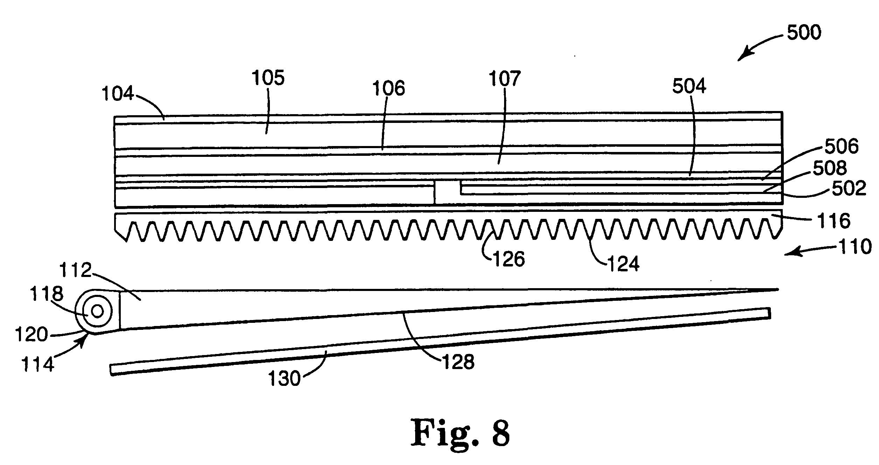

Fig. 8 shows a display 500 similar in construction to the display 100. Like reference numerals are used to illustrate like elements of both the display 100 and the display 500.

In Fig. 8, the rear polarizer 108, the diffuser 131 and the reflective polarizer 132, as illustrated in Fig. 2, are replaced by the combined element 502. The combined element 502 may be formed by laminating together a rear polarizer 504, such as rear polarizer 108, a diffuser 506, such as the diffuser 131, and a reflective polarizer 508, such as the reflective polarizer 132. It will be appreciated that other techniques for forming the combined element 502 may be used.

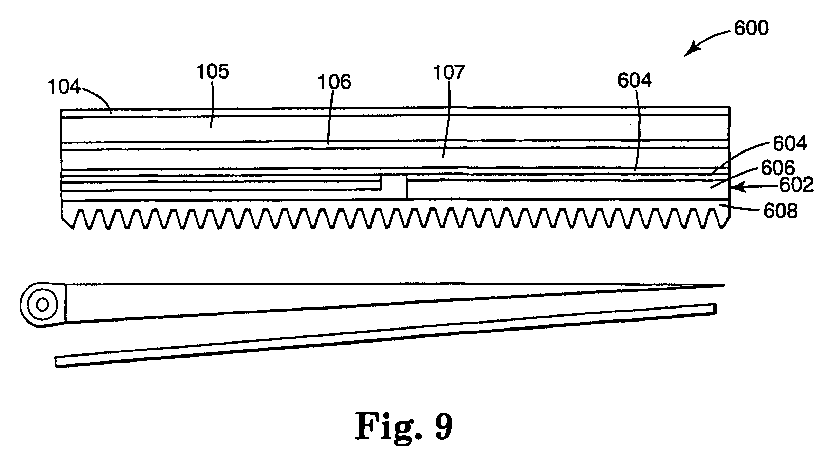

Fig. 9 shows a display 600 similar in construction to the display 100. Like reference numerals are used to illustrate like elements of both the display 100 and the display 600.

In Fig. 9, the rear polarizer 108, the diffuser 131, the reflective polarizer 132 and the turning film 116, as illustrated in Fig. 2, are replaced by the combined element 602. The combined element 602 may be formed by laminating together a rear polarizer 602, such as rear polarizer 108, a diffuser 604, such as the diffuser 131, a reflective polarizer 606, such as the reflective polarizer 132, and a turning film 608, such as turning film 116. Alternatively, a combined element, such as combined element 502 may be formed, and then this element laminated to a rear diffuser, such as rear diffuser 108. It will be appreciated.that still other techniques for forming the combined element 602 may be used.

In each of the embodiments shown in Figs. 5-9, the combined optical element improves apparent display brightness by reflecting light rays having a second polarization orientation (b) back toward and substantially into the lightguide 112 where these light rays are randomized in polarization and direction. A portion of these randomized light rays reemerge from the lightguide having the first polarization orientation (a). Because light rays having the first polarization orientation (a) are transmitted through the liquid crystal display device 102, more light rays ultimately emerge from the display enhancing the brightness of the display. Moreover, the combination of optical elements may reduce the thickness and weight of the display device, and may reduce optical defects resulting from optical coupled of adjacent optical elements in the display.

Modifications and alternative embodiments of the invention will be apparent to those skilled in the art in view of the foregoing description. This description is to be construed as illustrative only, and is for the purpose of teaching those skilled in the art the best mode of carrying out the invention. The details of the structure and method may be varied substantially without departing from the spirit of the invention, and the exclusive use of all modifications which come within the scope of the appended claims is reserved.

## Claims (Claims for the following Contracting State(s): DE, FR, GB, NL)

1. An illumination device comprising:
a light, source,
a lightguide, the lightguide having an input surface, an output surface and a back surface, the light source providing light rays incident on the input surface and wherein the lightguide directs light rays from the light source and entering the lightguide at the input surface to exit the lightguide through the output surface;
a turning film coupled to the output surface of the lightguide for redirecting the light rays from the output surface of the lightguide through the turning film and from an output surface of the turning film;
at least one optical element combined with the turning film such that the at least one optical element has an input surface optically and mechanically coupled to the output surface of the turning film to form a combined element, said optical element including a multilayer reflective polarizer, and said optical element transmits light rays having a first characteristic and reflects light rays having a second characteristic;
a reflector coupled to the back surface of the lightguide; and
wherein lights rays, having the second characteristic are reflected by said optical element through the turning film and into the lightguide, and at least a portion of said reflected light rays reemerge from the lightguide having the first characteristic.

2. The illumination device of claim 1, wherein the at least one optical element is formed integrally with the turning film.

3. The illumination device of claim 1, wherein the at least one optical element futher comprises a diffuser.

4. The illumination device of claim 1, wherein the at least one optical element further comprises a brightness enhancing prism film.

5. The illumination device of claim 4, wherein the reflective polarizer is coupled to an output surface of the brightness enhancing prism film.

6. The illumination device of claim 1, wherein the at least one optical element is laminated to the output surface of the turning film.

7. illumination device of claim 1, wherein the turning film includes a plurality of prism structures arranged on an input surface of the turning film.

8. A display device comprising a liquid crystal display module having an input polarizer and an output polarizer and the illumination device of claim 1 coupled to the liquid crystal display module.

9. An illumination device, comprising:
a light source,
a turning film coupled to the light source for redirecting the light rays from the light source through the turning film and from an output surface of the turning film;
at least one optical element combined with the turning film such that the at least one optical element has an input surface optically and mechanically coupled to the output surface of the turning film to form a combined element, the optical element comprising a multilayer reflective polarizer; and
wherein said optical element transmits light rays having a first characteristic and reflects light rays haying a second characteristic.

10. The illumination device of claim 9, wherein the at least one optical element is laminated to the turning film

11. The illumination device of claim 10, wherein the at least one optical element further comprises a diffuser.

12. The illumination device of claim 9, wherein the turning film includes a plurality of prism structures arranged on an input surface of the turning film.

13. The Illumination device of claim 9, wherein the at least one optical element further comprises a diffuser.

14. A display device comprising a liquid crystal display module having an input polarizer and an output polarizer and the illumination device of claim 9 coupled to the liquid crystal display module.

15. An illumination device comprising:
a light source,
a turning film coupled to the light source for redirecting the light rays from the light source through the turning film and from an output surface of the turning film; and
at least one optical element combined with the turning film such that the at least one optical element has an input surface optically and mechanically coupled to the output surface of the turning film to form a combined element, the optical element comprising a cholesteric polarizer;
wherein said optical element transmits light rays having a first characteristic and reflects light mys having a second characteristic.

16. Illumination device of claim 15, wherein the optical element further comprises a birefringent retarder.

## Claims (Claims for the following Contracting State(s): ES)

1. An illumination device comprising:
a light source,
a lightguide, the lightguide having an input surface, an output surface and a back surface, the light source providing light rays incident on the input surface and wherein the lightguide directs light rays from the light source and entering the lightguide at the input surface to exit the lightguide through the output surface in a substantially uniform manner;
a turning film coupled to the output surface of the lightguide, the turning film including a plurality of prism structures arranged on an input surface of the turning film for redirecting the light rays from the output surface of the lightguide through the turning film and from an output surface of the turning film;
at least one optical element combined with the turning film such that the at least one optical element has an unput surface optically and mechanically coupled to the output surface of the turning film thus forming a combined element, said opcical element including an optical structure that transmits light rays having a first characteristic and reflects light rays having a second characteristic;
a reflector coupled to the back surface of the lightguide; and
wherein lights rays having the second characteristic are reflected by said optical element through the turning film and into the lightguide, and at least a portion of said reflected light rays reemerge from the lightguide having the first characteristic.

2. The illumination device of claim 1, wherein the first characteristic comprises a first polarization and the second characteristic comprises a second polarization different from the first polarization.

3. The illumination device of claim 1, wherein the first characteristic comprises a first angular range and the second characteristic comprises a second angular range different from the first angular range.

4. The illumination device of claim 1, wherein the at least one optical element comprises a reflective polarizer.

5. The illumination device of claim 1, wherein the at least one optical element is formed integral with the turning film.

6. The illumination device of claim 1, wherein the at least one optical element comprises in combination a reflective polarizer and a diffuser.

7. The illumination device of claim 1, wherein the at least one optical element comprises in combination a brightness enhancing prism film and a reflective polarizer.

8. The illumination device of claim 7, wherein the reflective polarizer is coupled to an output surface of the brightness enhancing prism film.

9. The illumination device of claim 1, wherein the at least one optical element is laminated to the output surface of the turning film.

10. The illumination device of claim 1, wherein the at least one optical element comprises in combination a diffusive, reflective polarizer and an absorbing polarizer.

11. The illumination device of claim 10, wherein the at least one optical element is laminated to the output surface of the turning film.

12. The illumination device of claim 5, wherein the at least one optical element comprises in combination a cholesteric polarizer and a birefringent film retarder.

13. A display device comprising:
a liquid crystal display module, the liquid crystal display module having an input polarizer and an output polarizer;
a diffuser, the diffused being coupled to the input polarizer of the liquid crystal display module;
a reflective polarizer, the reflective polarizer being coupled to an input of the diffuser;
a turning film, the turning film being combined with the reflective polarizer to form a combined element;
a lightguide, the lightguide having an input surface, an output surface and a back surface,
a light source, the light source providing light rays incident on the input surface of the lightguide and wherein the lightguide directs light rays from the light source and entering the lightguide at the input surface to exit the lightguide through the output surface in a substantially uniform manner;
a reflector coupled to the back surface of the lightguide; and
wherein the reflective polarizer transmits light rays having a first polarization and reflects light rays having a second polarization, said reflected light rays being reflected through the turning film and into the lightguide, and at least a portion of said reflected light rays being reflected by the reflector at the back surface and reemerging from the lightguide having the first polarization.

14. A display device comprising:
a liquid crystal display module, the liquid crystal display module having an input polarizer and an output polarizer;
a combined diffuser/reflective polarizer element, the combined diffuser/reflective polarizer element being coupled to the input polarizer of the liquid crystal display module;
a turning film, the turning film being coupled to an input of the combined diffuser/reflective polarizer element; a lightguide, the lightguide having an input surface, an output surface and a back surface;
a lights source, the light source providing light rays incident on the input surface of the lightguide and wherein the lightguide directs light rays from the light source and entering the lightguide at the input surface to exit the lightguide through the output surface in a substantially uniform manner;
a reflector coupled to the back surface of the lightguide; and
wherein the combined diffuser/reflective polarizer element transmits light rays having a first polarization and reflects light rays having a second polarization, said reflected light rays being reflected through the turning film and into the lightguide, and at least a portion of said reflected light rays being reflected by the reflector at the back surface and reemerging from the lightguide having the first polarization.

15. The display device of claim 14, wherein the combined diffuser/reflective polarizer comprises a laminate including a diffuser and a reflective polarizer film.

16. The display devise of claim 14, wherein the combined diffuser/reflective polarizer comprises a diffusive, structure formed in an output surface of a reflective polarizer film.

17. A display device comprising:
a liquid crystal display module, the liquid crystal display module having an input polarizer and an output polarizer;
a diffuser, the diffuser being coupled to the input polarizer of the liquid crystal display module;
a combined turning film/reflective polarizer element, the combined turning film/reflective polarizer element being coupled to an input of the diffuser;
a lightguide, the lightguide having an input surface, an output surface adjacent the combined turning film/reflective polarizer element and a back surface;
a light source, the lights sourde providing light rays incident on the input surface of the lightguide and wherein the lightguide directs light rays from the lights source and entering the lightguide at the input surface to exit the lightguide through the output surface in a substantially uniform Manner;
a reflector coupled to the back surface of the lightguide; and
wherein the combined turning film/reflective polarizer element transmits light rays having a first polarization and reflects light rays having a second polarization, said reflected light rays being reflected into the lightguide, and at least a portion of said reflected light rays being reflected by the reflector at the back surface and reemerging from the lightguide having the first polarization.

18. The display device of claim 17, wherein the combined turning film/reflective polarizer comprises a laminate of a turning film and a reflective polarizing film.

19. The display device of claim 17, wherein the combined turning film/reflective polarizer comprises turning prisms formed in an input surface of a reflective polarizer.

20. A display device comprising:
a liquid crystal module, the liquid crystal display module having an input polarizer and an output polarizer;
a combined diffuser/turning film/reflective polarizer element, the combined diffuser/turning film/reflectice polarizer element being coupled to the input polarizer of the liquid crystal display;
a lightguide, the lightguide having an input surface, an output surface adjacent the combined diffuser/turning film/reflective polarizer element and a back surface;
a light source, the light source providing light rays incident on the input surface of the lightguide and wherein the lightguide directs light rays from the light source and entering the lightguide at the input surface to exit the lightguide through the output surface in a substantially uniform manner;
a reflector coupled to the back surface of the lightguide; and
wherein the combined diffuser/turning film/reflective polarizer element transmits light rays having a first polarization and reflects light rays having a second polarization, said reflected light rays being reflected into the lightguide, and at least a portion of said reflected light rays being reflected by the reflector at the back surface and reemerging from the lightguide having the first polarization.

21. The display device of claim 20, wherein the combined diffuser/turning film/reflective polarizer comprises a laminate of a diffuser, a turning film and a reflective polarizing film.

22. The display device of claim 20, wherein the combined diffuser/turning film/reflective polarizer comprises turning prisms formed on an input surface of a reflective polarizer and a diffuser structure formed on an output surface of the reflective polarizer.

23. A method of enhancing brightness in a display device according to any of the preceding claims, the display device including a liquid crystal display assembly and an illumination source, the illumination source having a lightguide that extracts light rays according to the principle of frustrate total internal reflection; the method comprising:
injecting light rays having a first polarization orientation and a second polarization orientation into the lightguide at an input surface;
providing a combined optical element between the liquid crystal display assembly and the illumination source using the combined optical element to:
(a) turn light rays exiting an output surface of the lightguide to a direction substantially normal to the output surface;
(b) transmit light rays having the first polarization orientation;
(c) reflect light rays having the second polarization orientation back toward and substantially through the lightguide;
(d) randomize the polarization orientation of said reflected light rays to produce a portion of said reflected light rays having the first polarization orientation; and
(e) transmit said portion of light rays.

24. The method of claim 23, wherein the step of providing a combined optical element comprises providing a reflective polarizer between the liquid crystal display assembly and the illumination source.

25. The method of claim 23, wherein the step of provinding a combined optical element comprises providing a combined turning film/reflective polarizer between the liquid crystal display assembly and the illumination source.

26. The method of claim 23, wherein the step of providing a combined optical element comprises providing a combined diffuser/reflective polarizer between the liquid crystal display assembly and the illumination source.

27. The method of claim 23, wherein the step of providing a combined optical element comprises providing combined diffuser/turning film/reflective polarizer between the liquid crystal display assembly and the illumination source.

## Patentansprüche (Patentansprüche für folgende(n) Vertragsstaat(en): DE, FR, GB, NL)

1. Beleuchtungsvorrichtung, die aufweist:
eine Lichtquelle;
einen Lichtleiter, wobei der Lichtleiter eine Eingangsfläche, eine Ausgangsfläche und eine Rückfläche aufweist, wobei die Lichtquelle Lichtstrahlen bereitstellt, die auf die Eingangsfläche fallen, und wobei der Lichtleiter Lichtstrahlen, die von der Lichtquelle kommen und an der Eingangsfläche in den Lichtleiter eintreten, so führt, dass sie den Lichtleiter durch die Ausgangsfläche verlassen;
eine-Umlenkschicht, die mit der Ausgangsfläche des Lichtleiters verbunden ist, zum Umlenken der Lichtstrahlen von der Ausgangsfläche des Lichtleiters durch die Umlenkschicht und von einer Ausgangsfläche der Umlenkschicht;
mindestens ein optisches Element, das mit der Umlenkschicht kombiniert ist, so dass das mindestens eine optische Element eine Eingangsfläche aufweist, die optisch und mechanisch mit der Ausgangsfläche der Umlenkschicht gekoppelt ist, um ein kombiniertes Element zu bilden, wobei das optische Element einen mehrschichtigen Reflexionspolarisator aufweist, und wobei das optische Element Lichtstrahlen, die eine erste Eigenschaft aufweisen, durchlässt, und Lichtstrahlen, die eine zweite Eigenschaft aufweisen, reflektiert;
einen Reflektor, der mit der Rückfläche des Lichtleiters verbunden ist; und
wobei Lichtstrahlen, welche die zweite Eigenschaft aufweisen, vom optischen Element durch die Umlenkschicht und in den Lichtleiter reflektiert werden, und wobei mindestens ein Abschnitt der reflektierten Lichtstrahlen mit der ersten Eigenschaft aus dem Lichtleiter wieder austreten.

2. Beleuchtungsvorrichtung nach Anspruch 1, wobei das mindestens eine optische Element einstückig mit der Umlenkschicht gebildet ist.

3. Beleuchtungsvorrichtung nach Anspruch 1, wobei das mindestens eine optische Element ferner einen Streukörper aufweist.

4. Beleuchtungsvorrichtung nach Anspruch 1, wobei das mindestens eine optische Element ferner eine helligkeitssteigernde Prismenschicht aufweist.

5. Beleuchtungsvorrichtung nach Anspruch 4, wobei der Reflexionspolarisator mit einer Ausgangsfläche der helligkeitssteigernden Prismenschicht verbunden ist.

6. Beleuchtungsvorrichtung nach Anspruch 1, wobei das mindestens eine optische Element auf die Ausgangsfläche der Umlenkschicht geschichtet ist.

7. Beleuchtungsvorrichtung nach Anspruch 1, wobei die Umlenkschicht mehrere Prismenstrukturen aufweist, die an einer Eingangsfläche der Umlenkschicht angeordnet sind.

8. Anzeigevorrichtung, mit einem Flüssigkristallanzeigemodul, das einen Eingangspolarisator und einen Ausgangspolarisator aufweist, und die Beleuchtungsvorrichtung von Anspruch 1, die mit dem Flüssigkristallanzeigemodul verbunden ist.

9. Beleuchtungsvorrichtung, die aufweist:
eine Lichtquelle;
eine Umlenkschicht, die mit der Lichtquelle verbunden ist, zum Umlenken der Lichtstrahlen von der Lichtquelle durch die Umlenkschicht und von einer Ausgangsfläche der Umlenkschicht;
mindestens ein optisches Element, das mit der Umlenkschicht kombiniert ist, so dass das mindestens eine optische Element eine Eingangsfläche aufweist, die optisch und mechanisch mit der Ausgangsfläche der Umlenkschicht gekoppelt ist, um ein kombiniertes Element zu bilden, wobei das optische Element einen mehrschichtigen Reflexionspolarisator aufweist; und
wobei das optische Element Lichtstrahlen, die eine erste Eigenschaft aufweisen, durchlässt, und Lichtstrahlen, die eine zweite Eigenschaft aufweisen, reflektiert.

10. Beleuchtungsvorrichtung nach Anspruch 9, wobei das mindestens eine optische Element auf die Umlenkschicht laminiert ist.

11. Beleuchtungsvorrichtung nach Anspruch 10, wobei das mindestens eine optische Element ferner einen Streukörper aufweist.

12. Beleuchtungsvorrichtung nach Anspruch 9, wobei die Umlenkschicht mehrere Prismenstrukturen aufweist, die an einer Eingangsfläche der Umlenkschicht angeordnet sind.

13. Beleuchtungsvorrichtung nach Anspruch 9, wobei das mindestens eine optische Element ferner einen Streukörper aufweist.

14. Anzeigevorrichtung, mit einem Flüssigkristallanzeigemodul, das einen Eingangspolarisator und einen Ausgangspolarisator aufweist, und die Beleuchtungsvorrichtung von Anspruch 9, die mit dem Flüssigkristallanzeigemodul gekoppelt ist.

15. Beleuchtungsvorrichtung, die aufweist:
eine Lichtquelle;
eine Umlenkschicht, die mit der Lichtquelle verbunden ist, zum Umlenken der Lichtstrahlen von der Lichtquelle durch die Umlenkschicht und von einer Ausgangsfläche der Umlenkschicht; und
mindestens ein optisches Element, das mit der Umlenkschicht kombiniert ist, so dass das mindestens eine optische Element eine Eingangsfläche aufweist, die optisch und mechanisch mit der Ausgangsfläche der Umlenkschicht gekoppelt ist, um ein kombiniertes Element zu bilden, wobei das optische Element einen cholesterischen Polarisator aufweist;
wobei das optische Element Lichtstrahlen, die eine erste Eigenschaft aufweisen, durchlässt, und Lichtstrahlen, die eine zweite Eigenschaft aufweisen, reflektiert.

16. Beleuchtungsvorrichtung nach Anspruch 15, wobei das optische Element ferner einen doppelbrechenden Verzögerer aufweist.

## Patentansprüche (Patentansprüche für folgende(n) Vertragsstaat(en): ES)

1. Beleuchtungsvorrichtung, aufweisend:
eine Lichtquelle;
einen Lichtleiter, wobei der Lichtleiter eine Eingangsfläche aufweist, eine Ausgangsfläche und eine Rückfläche, wobei die Lichtquelle Lichtstrahlen bereitstellt, die auf die Eingangsfläche auffallen, und wobei der Lichtleiter Lichtstrahlen, die von der Lichtquelle kommen und an der Eingangsfläche in den Lichtleiter eintreten, so leitet, dass sie den Lichtleiter durch die Ausgangsfläche in einer im Wesentlichen gleichmäßigen Art und Weise verlassen;
eine Umlenkschicht, die mit der Ausgangsfläche des Lichtleiters verbunden ist, zum Umlenken der Lichtstrahlen von der Ausgangsfläche des Lichtleiters durch die Umlenkschicht und von einer Ausgangsfläche der Umlenkschicht, wobei die Umlenkschicht mehrere Prismenstrukturen, die auf einer Eingangsfläche der Umlenkschicht angeordnet sind, aufweist;
mindestens ein optisches Element, das mit der Umlenkschicht verbunden ist, so dass das mindestens eine optische Element eine Eingangsfläche aufweist, die optisch und mechanisch unter Bildung eines kombinierten Elements mit der Ausgangsfläche der Umlenkschicht verbunden ist, wobei das optische Element eine optische Struktur aufweist, die Lichtstrahlen, die eine erste Eigenschaft aufweisen, durchlässt, und Lichtstrahlen, die eine zweite Eigenschaft aufweisen, reflektiert;
einen Reflektor, der mit der Rückfläche des Lichtleiters verbunden ist; und
wobei Lichtstrahlen, welche die zweite Eigenschaft aufweisen, vom optischen Element durch die Umlenkschicht und in den Lichtleiter reflektiert werden, und wobei mindestens ein Abschnitt der reflektierten Lichtstrahlen, die erste Eigenschaft aufweisen, wenn sie aus dem Lichtleiter wieder austreten.

2. Beleuchtungsvorrichtung nach Anspruch 1, wobei die erste Eigenschaft eine erste Polarisation und die zweite Eigenschaft eine zweite Polarisation, die sich von der ersten Polarisation unterscheidet, aufweist.

3. Beleuchtungsvorrichtung nach Anspruch 1, wobei die erste Eigenschaft einen ersten Winkelbereich und die zweite Eigenschaft einen zweiten Winkelbereich, der sich vom ersten Winkelbereich unterscheidet, aufweist.

4. Beleuchtungsvorrichtung nach Anspruch 1, wobei das mindestens eine optische Element einen Reflexionspolarisator aufweist.

5. Beleuchtungsvorrichtung nach Anspruch 1, wobei das mindestens eine optische Element in einem Stück mit der Umlenkschicht gebildet ist.

6. Beleuchtungsvorrichtung nach Anspruch 1, wobei das mindestens eine optische Element in Kombination einen Reflexionspolarisator und einen Streukörper aufweist.

7. Beleuchtungsvorrichtung nach Anspruch 1, wobei das mindestens eine optische Element in Kombination eine helligkeitssteigernde Prismenschicht und einen Reflexionspolarisator aufweist.

8. Beleuchtungsvorrichtung nach Anspruch 7, wobei der Reflexionspolarisator mit einer Ausgangsfläche der helligkeitssteigernden Prismenschicht verbunden ist.

9. Beleuchtungsvorrichtung nach Anspruch 1, wobei das mindestens eine optische Element auf die Ausgangsfläche der Umlenkschicht geschichtet ist.

10. Beleuchtungsvorrichtung nach Anspruch 1, wobei das mindestens eine optische Element in Kombination einen Diffusions-Reflexionspolarisator und einen Absorptionspolarisator aufweist.

11. Beleuchtungsvorrichtung nach Anspruch 10, wobei das mindestens eine optische Element auf die Ausgangsfläche der Umlenkschicht geschichtet ist.

12. Beleuchtungsvorrichtung nach Anspruch 5, wobei das mindestens eine optische Element in Kombination einen cholesterischen Polarisator und einen doppelbrechenden Schichtverzögerer aufweist.

13. Anzeigevorrichtung, aufweisend:
ein Flüssigkristallanzeigemodul, wobei das Flüssigkristallanzeigemodul einen Eingangspolarisator und einen Ausgangspolarisator aufweist;
einen Streukörper, wobei der Streukörper mit dem Eingangspolarisator des Flüssigkristallanzeigemoduls verbunden ist;
einen Reflexionspolarisator, wobei der Reflexionspolarisator mit einem Eingang des Streukörpers verbunden ist;
eine Umlenkschicht, wobei die Umlenkschicht mit dem Reflexionspolarisator verbunden ist, um ein kombiniertes Element zu bilden;
einen Lichtleiter, wobei der Lichtleiter eine Eingangsfläche, eine Ausgangsfläche und eine Rückfläche aufweist;
eine Lichtquelle, wobei die Lichtquelle Lichtstrahlen bereitstellt, die auf die Eingangsfläche des Lichtleiters auffallen, und wobei der Lichtleiter Lichtstrahlen, die von der Lichtquelle kommen und an der Eingangsfläche in den Lichtleiter eintreten, so leitet, dass sie den Lichtleiter durch die Ausgangsfläche in einer im Wesentlichen gleichmäßigen Art und Weise verlassen;
einen Reflektor, der mit der Rückfläche des Lichtleiters verbunden ist; und
wobei der Reflexionspolarisator Lichtstrahlen, die eine erste Polarisation aufweisen, durchlässt, und Lichtstrahlen, die eine zweite Polarisation aufweisen, reflektiert, wobei die reflektierten Lichtstrahlen durch die Umlenkschicht und in den Lichtleiter reflektiert werden, und wobei mindestens ein Abschnitt der reflektierten Lichtstrahlen die erste Polarisation aufweisen, wenn sie durch den Reflektor an der Rückfläche reflektiert worden sind und aus dem Lichtleiter wieder austreten.

14. Anzeigevorrichtung, aufweisend:
ein Flüssigkristallanzeigemodul, wobei das Flüssigkristallanzeigemodul einen Eingangspolarisator und einen Ausgangspolarisator aufweist;
ein kombiniertes Diffusions/Reflexionspolarisatorelement, wobei das kombinierte Diffusions/Reflexionspolarisatorelement mit dem Eingangspolarisator des Flüssigkristallanzeigemoduls verbunden ist;
eine Umlenkschicht, wobei die Umlenkschicht mit einem Eingang des kombinierten Diffusions/Reflexionspolarisatorelements verbunden ist;
einen Lichtleiter, wobei der Lichtleiter eine Eingangsfläche, eine Ausgangsfläche und eine Rückfläche aufweist;
eine Lichtquelle, wobei die Lichtquelle Lichtstrahlen bereitstellt, die auf die Eingangsfläche des Lichtleiters auffallen, und wobei der Lichtleiter Lichtstrahlen, die von der Lichtquelle kommen und an der Eingangsfläche in den Lichtleiter eintreten, so leitet, dass sie den Lichtleiter durch die Ausgangsfläche in einer im Wesentlichen gleichmäßigen Art und Weise verlassen;
einen Reflektor, der mit der Rückfläche des Lichtleiters verbunden ist; und
wobei das kombinierte Diffusions/Reflexionspolarisatorelement Lichtstrahlen, die eine erste Polarisation aufweisen, durchlässt, und Lichtstrahlen, die eine zweite Polarisation aufweisen, reflektiert, wobei die reflektierten Lichtstrahlen durch die Umlenkschicht und in den Lichtleiter reflektiert werden, und wobei mindestens ein Abschnitt der reflektierten Lichtstrahlen die erste Polarisation aufweisen, wenn sie durch den Reflektor an der Rückfläche reflektiert worden sind und aus dem Lichtleiter wieder austreten.

15. Anzeigevorrichtung nach Anspruch 14, wobei der kombinierte Diffusions-/Reflexionspolarisator einen Schichtstoff, der einen Streukörper und eine Reflexionspolarisatorschicht aufweist, aufweist.

16. Anzeigevorrichtung nach Anspruch 14, wobei der kombinierte Diffusions-/Reflexionspolarisator eine Diffusionsstruktur, die in einer Ausgangsfläche einer Reflexionspolarisatorschicht gebildet ist, aufweist.

17. Anzeigevorrichtung, aufweisend:
ein Flüssigkristallanzeigemodul, wobei das Flüssigkristallanzeigemodul einen Eingangspolarisator und einen Ausgangspolarisator aufweist;
einen Streukörper, wobei der Streukörper mit dem Eingangspolarisator des Flüssigkristallanzeigemoduls verbunden ist;
ein kombiniertes Umlenkschicht/Reflexionspolarisatorelement, wobei das kombinierte Umlenkschicht/Reflexionspolarisatorelement mit einem Eingang des Streukörpers verbunden ist;
einen Lichtleiter, wobei der Lichtleiter eine Eingangsfläche, eine Ausgangsfläche, die angrenzend an das kombinierte Umlenkschicht/Reflexionspolarisatorelement angeordnet ist, und eine Rückfläche aufweist;
eine Lichtquelle, wobei die Lichtquelle Lichtstrahlen bereitstellt, die auf die Eingangsfläche des Lichtleiters auffallen, und wobei der Lichtleiter Lichtstrahlen, die von der Lichtquelle kommen und an der Eingangsfläche in den Lichtleiter eintreten, so leitet, dass sie den Lichtleiter durch die Ausgangsfläche in einer im Wesentlichen gleichmäßigen Art und Weise verlassen;
einen Reflektor, der mit der Rückfläche des Lichtleiters verbunden ist; und
wobei das kombinierte Umlenkschicht/Reflexionspolarisatorelement Lichtstrahlen, die eine erste Polarisation aufweisen, durchlässt, und Lichtstrahlen, die eine zweite Polarisation aufweisen, reflektiert, wobei die reflektierten Lichtstrahlen in den Lichtleiter reflektiert werden, und wobei mindestens ein Abschnitt der reflektierten Lichtstrahlen die erste Polarisation aufweisen, wenn sie durch den Reflektor an der Rückfläche reflektiert worden sind und aus dem Lichtleiter wieder austreten.

18. Anzeigevorrichtung nach Anspruch 17, wobei das kombinierte Umlenkschicht/Reflexionspolarisatorelement einen Schichtstoff aus einer Umlenkschicht und einer reflektierenden Polarisationsschicht aufweist.

19. Anzeigevorrichtung nach Anspruch 17, wobei das kombinierte Umlenkschicht/Reflexionspolarisatorelement Umlenkprismen, die in einer Eingangsfläche eines Reflexionspolarisators gebildet sind, aufweist.

20. Anzeigevorrichtung, aufweisend:
ein Flüssigkristallanzeigemodul, wobei das Flüssigkristallanzeigemodul einen Eingangspolarisator und einen Ausgangspolarisator aufweist;
ein kombiniertes Streukörper-/Umlenkschicht/Reflexionspolarisatorelement, wobei das kombinierte Streukörper-/Umlenkschicht/Reflexionspolarisatorelement mit dem Eingangspolarisator des Flüssigkristallanzeigemoduls verbunden ist;
einen Lichtleiter, wobei der Lichtleiter eine Eingangsfläche, eine Ausgangsfläche, die angrenzend an das kombinierte Streukörper/Umlenkschicht-/Reflexionspolarisatorelement angeordnet ist, und eine Rückfläche aufweist;
eine Lichtquelle, wobei die Lichtquelle Lichtstrahlen bereitstellt, die auf die Eingangsfläche des Lichtleiters auffallen, und wobei der Lichtleiter Lichtstrahlen, die von der Lichtquelle kommen und an der Eingangsfläche in den Lichtleiter eintreten, so leitet, dass sie den Lichtleiter durch die Ausgangsfläche in einer im Wesentlichen gleichmäßigen Art und Weise verlassen;
einen Reflektor, der mit der Rückfläche des Lichtleiters verbunden ist; und
wobei das kombinierte Streukörper-/Umlenkschicht/Reflexionspolarisatorelement Lichtstrahlen, die eine erste Polarisation aufweisen, durchlässt, und Lichtstrahlen, die eine zweite Polarisation aufweisen, reflektiert, wobei die reflektierten Lichtstrahlen in den Lichtleiter reflektiert werden, und wobei mindestens ein Abschnitt der reflektierten Lichtstrahlen die erste Polarisation aufweisen, wenn sie durch den Reflektor an der Rückfläche reflektiert worden sind und aus dem Lichtleiter wieder austreten.

21. Anzeigevorrichtung nach Anspruch 20, wobei das kombinierte Streukörper-/Umlenkschicht/Reflexionspolarisatorelement einen Schichtstoff aus einem Streukörper, einer Umlenkschicht und einer reflektierenden Polarisationsschicht aufweist.

22. Anzeigevorrichtung nach Anspruch 20, wobei das kombinierte Streukörper-/Umlenkschicht/Reflexionspolarisatorelement Umlenkprismen, die an einer Eingangsfläche eines Reflexionspolarisators gebildet sind, und eine lichtstreuende Struktur, die an einer Ausgangsfläche des Reflexionspolarisators gebildet sind, aufweist.

23. Verfahren zum Verbessern der Helligkeit in einer Anzeigevorrichtung nach einem der vorhergehenden Ansprüche, wobei die Anzeigevorrichtung eine Flüssigkristallanzeigebaueinheit und eine Beleuchtungsquelle aufweist, wobei die Beleuchtungsquelle einen Lichtleiter, der Lichtstrahlen nach dem Prinzip der verhinderten totalen internen Reflexion gewinnt, aufweist; das Verfahren aufweisend:
Einspeisen von Lichtstrahlen, die eine erste Polarisationsausrichtung und eine zweite Polarisationsausrichtung aufweisen, an einer Eingangsfläche in den Lichtleiter;
Bereitstellen eines kombinierten optischen Elements zwischen der Flüssigkristallanzeigebaueinheit und der Beleuchtungsquelle;
Verwenden des kombinierten optischen Elements, um:
(a) Lichtstrahlen, die eine Ausgangsfläche des Lichtleiters verlassen, in eine Richtung im Wesentlichen senkrecht zur Ausgangsfläche umzulenken;
(b) Lichtstrahlen, welche die erste Polarisationsausrichtung aufweisen, durchzulassen;
(c) Lichtstrahlen, welche die zweite Polarisationsausrichtung aufweisen, zurück zum und im Wesentlichen durch den Lichtleiter zu reflektieren;
(d) die Polarisationsausrichtung der reflektierten Lichtstrahlen regellos anzuordnen, um einen Abschnitt der reflektierten Lichtstrahlen zu erzeugen, der die erste Polarisationsausrichtung aufweist; und
(e) diesen Abschnitt der Lichtstrahlen durchzulassen.

24. Verfahren nach Anspruch 23, wobei der Schritt des Bereitstellens eines kombinierten optischen Elements das Bereitstellen eines Reflexionspolarisators zwischen der Flüssigkristallanzeigebaueinheit und der Beleuchtungsquelle aufweist.

25. Verfahren nach Anspruch 23, wobei der Schritt des Bereitstellens eines kombinierten optischen Elements das Bereitstellen eines kombinierten Umlenkschicht-/Reflexionspolarisatorelements zwischen der Flüssigkristallanzeigebaueinheit und der Beleuchtungsquelle aufweist.

26. Verfahren nach Anspruch 23, wobei der Schritt des Bereitstellens eines kombinierten optischen Elements das Bereitstellen eines kombinierten Streukörper-/Reflexionspolarisatorelements zwischen der Flüssigkristallanzeigebaueinheit und der Beleuchtungsquelle aufweist.

27. Verfahren nach Anspruch 23, wobei der Schritt des Bereitstellens eines kombinierten optischen Elements das Bereitstellen eines kombinierten Streukörper-/Umlenkschicht-/Reflexionspolarisatorelements zwischen der Flüssigkristallanzeigebaueinheit und der Beleuchtungsquelle aufweist.

## Revendications (Revendications pour l'(les) Etat(s) contractant(s) suivant(s): DE, FR, GB, NL)

1. Dispositif d'éclairage, comprenant
une source de lumière,
un guide de lumière, le guide de lumière présentant une surface d'entrée, une surface de sortie et une surface arrière, la source de lumière envoyant des rayons lumineux incidents sur la surface d'entrée, et dans lequel le guide de lumière dirige les rayons lumineux de la source de lumière, ceux-ci pénétrant dans le guide de lumière à la surface d'entrée pour sortir du guide de lumière à travers la surface de sortie ;
un film rotatif couplé à la surface de sortie du guide de lumière pour rediriger les rayons lumineux de la surface de sortie du guide de lumière à travers le film rotatif et d'une surface de sortie du film rotatif ;
au moins un élément optique combiné au film rotatif de telle sorte que l'au moins un élément optique présente une surface d'entrée optiquement et mécaniquement couplée à la surface de sortie du film rotatif pour former un élément combiné, ledit élément optique comprenant un polariseur réflectif multicouches, et ledit élément optique transmettant les rayons lumineux présentant une première caractéristique et réfléchissant les rayons lumineux présentant une deuxième caractéristique ;
un réflecteur couplé à la surface arrière du guide de lumière ; et
dans lequel les rayons lumineux présentant la deuxième caractéristique sont réfléchis par ledit élément optique à travers le film rotatif et dans le guide de lumière, et au moins une partie desdits rayons lumineux réfléchis ressortent du guide de lumière en présentant la première caractéristique.

2. Dispositif d'éclairage selon la revendication 1, dans lequel l'au moins un élément optique est formé intégralement avec le film rotatif.

3. Dispositif d'éclairage selon la revendication 1, dans lequel l'au moins un élément optique comprend en outre un diffuseur.

4. Dispositif d'éclairage selon la revendication 1, dans lequel l'au moins un élément optique comprend en outre un film prismatique renforçant la luminosité.

5. Dispositif d'éclairage selon la revendication 4, dans lequel le polariseur réflectif est couplé à une surface de sortie du film prismatique renforçant la luminosité.

6. Dispositif d'éclairage selon la revendication 1, dans lequel l'au moins un élément optique est stratifié sur la surface de sortie du film rotatif.

7. Dispositif d'éclairage selon la revendication 1, dans lequel le film rotatif comprend une pluralité de structures prismatiques arrangées sur une surface d'entrée du film rotatif.

8. Dispositif d'affichage comprenant un module d'affichage à cristaux liquides présentant un polariseur d'entrée et un polariseur de sortie, ainsi que le.dispositif d'éclairage selon la revendication 1 couplé au module d'affichage à cristaux liquides.

9. Dispositif d'éclairage, comprenant ;
une source de lumière ;
un film rotatif couplé à la source de lumière pour rediriger les rayons lumineux de la source de lumière à travers le film rotatif et d'une surface de sortie du film rotatif ;
au moins un élément optique combiné au film rotatif de telle sorte que l'au moins un élément optique présente une surface d'entrée optiquement et mécaniquement couplée à la surface de sortie du film rotatif pour former un élément combiné, ledit élément optique comprenant un polariseur réflectif multicouches ; et
dans lequel ledit élément optique transmet les rayons lumineux présentant une première caractéristique et réfléchit les rayons lumineux présentant une deuxième caractéristique.

10. Dispositif d'éclairage selon la revendication 9, dans lequel l'au moins un élément optique est stratifié sur le film rotatif.

11. Dispositif d'éclairage selon la revendication 10, dans lequel l'au moins un élément optique comprend en outre un diffuseur.

12. Dispositif d'éclairage selon la revendication 9, dans lequel le film rotatif comprend une pluralité de structures prismatiques arrangées sur une surface d'entrée du film rotatif.

13. Dispositif d'éclairage selon la revendication 9, dans lequel l'au moins un élément optique comprend en outre un diffuseur.

14. Dispositif d'affichage comprenant un module d'affichage à cristaux liquide présentant un polariseur d'entrée et un polariseur de sortie, ainsi que le dispositif d'éclairage selon la revendication 9 couplé au module d'affichage à cristaux liquide.

15. Dispositif d'éclairage, comprenant ;
une source de lumière ;
un film rotatif couplé à la source de lumière pour rediriger les rayons lumineux de la source de lumière à travers le film rotatif et d'une surface de sortie du film rotatif ; et
au moins un élément optique combiné au film rotatif de telle sorte que l'au moins un élément optique présente une surface d'entrée optiquement et mécaniquement couplée à la surface de sortie du film rotatif pour former un élément combiné, ledit élément optique comprenant un polariseur cholestérique ;
dans lequel ledit élément optique transmet les rayons lumineux présentant une première caractéristique et réfléchit les rayons lumineux présentant une deuxième caractéristique.

16. Dispositif d'éclairage selon la revendication 15, dans lequel l'élément optique comprend en outre un retardateur biréfringent.

## Revendications (Revendications pour l'(les) Etat(s) contractant(s) suivant(s): ES)

1. Dispositif d'éclairage, comprenant:
une source de lumière,
un guide de lumière, le guide de lumière présentant une surface d'entrée, une surface de sortie et une surface arrière, la source de lumière envoyant des rayons lumineux incidents sur la surface d'entrée, et dans lequel le guide de lumière dirige les rayons lumineux à partir de la source de lumière, ceux-ci pénétrant dans le guide de lumière à la surface d'entrée pour sortir du guide de lumière à travers la surface de sortie d'une manière essentiellement uniforme;
un film rotatif couplé à la surface de sortie du guide de lumière, le film rotatif comprenant une pluralité de structures prismatiques arrangées sur une surface d'entrée du film rotatif, pour rediriger les rayons lumineux à partir de la surface de sortie du guide de lumière à travers le film rotatif et à partir d'une surface de sortie du film rotatif;
au moins un élément optique combiné au film rotatif de telle sorte que le au moins un élément optique présente une surface d'entrée optiquement et mécaniquement couplée à la surface de sortie du film rotatif formant ainsi un élément combiné, ledit élément optique comprenant une structure optique, et ledit élément optique transmettant des rayons lumineux présentant une première caractéristique et réfléchissant des rayons lumineux présentant une deuxième caractéristique;
un réflecteur couplé à la surface arrière du guide de lumière; et
dans lequel les rayons lumineux présentant la deuxième caractéristique sont réfléchis par ledit élément optique à travers le film rotatif et dans le guide de lumière, et au moins une partie desdits rayons lumineux réfléchis ressortent du guide de lumière en présentant la première caractéristique.

2. Dispositif d'éclairage selon la revendication 1, dans lequel la première caractéristique comprend une première polarisation, et la deuxième caractéristique comprend une deuxième polarisation différente de la première polarisation.

3. Dispositif d'éclairage selon la revendication 1, dans lequel la première caractéristique comprend un premier écart angulaire, et la deuxième caractéristique comprend un deuxième écart angulaire différent du premier écart angulaire.

4. Dispositif d'éclairage selon la revendication 1, dans lequel le au moins un élément optique comprend un polariseur réflectif.

5. Dispositif d'éclairage selon la revendication 1, dans lequel le au moins un élément optique forme un tout avec le film rotatif.

6. Dispositif d'éclairage selon la revendication 1, dans lequel le au moins un élément optique comprend en combinaison un polariseur réflectif et un diffuseur.

7. Dispositif d'éclairage selon la revendication 1, dans lequel le au moins un élément optique comprend en combinaison un film prismatique renforçant la luminosité et un polariseur réflectif.

8. Dispositif d'éclairage selon la revendication 7, dans lequel le polariseur réflectif est couplé à une surface de sortie du film prismatique renforçant la luminosité.

9. Dispositif d'éclairage selon la revendication 1, dans lequel le au moins un élément optique est stratifié sur la surface de sortie du film rotatif.

10. Dispositif d'éclairage selon la revendication 1, dans lequel le au moins un élément optique comprend en combinaison un polariseur réflectif de diffusion et un polariseur absorbant.

11. Dispositif d'éclairage selon la revendication 10, dans lequel le au moins un élément optique est stratifié sur la surface de sortie du film rotatif.

12. Dispositif d'éclairage selon la revendication 5, dans lequel le au moins un élément optique comprend en combinaison un polariseur cholestérique et un retardateur de film biréfringent.

13. Dispositif d'affichage, comprenant:
un module d'affichage à cristaux liquides, le module d'affichage à cristaux liquides présentant un polariseur d'entrée et un polariseur de sortie;
un diffuseur, le diffuseur étant couplé au polariseur d'entrée du module d'affichage à cristaux liquides;
un polariseur réflectif, le polariseur réflectif étant couplé à une entrée du diffuseur;
un film rotatif, le film rotatif étant combiné avec le polariseur réflectif pour former un élément combiné;
un guide de lumière, le guide de lumière présentant une surface d'entrée, une surface de sortie et une surface arrière;
une source de lumière, la source de lumière émettant des rayons lumineux incidents sur la surface d'entrée du guide de lumière, et dans laquelle le guide de lumière dirige les rayons lumineux à partir de la source de lumière, ceux-ci pénétrant dans le guide de lumière à la surface d'entrée pour sortir du guide de lumière à travers la surface de sortie d'une manière essentiellement uniforme;
un réflecteur couplé à la surface arrière du guide de lumière; et
dans lequel le polariseur réflectif transmet les rayons lumineux présentant une première polarisation et réfléchit les rayons lumineux présentant une deuxième polarisation, lesdits rayons lumineux réfléchis étant réfléchis à travers le film rotatif et jusque dans le guide de lumière, et au moins une partie desdits rayons lumineux réfléchis étant réfléchis par le réflecteur à la surface arrière et ressortant du guide de lumière en présentant la première polarisation.

14. Dispositif d'affichage, comprenant:
un module d'affichage à cristaux liquides, le module d'affichage à cristaux liquides présentant un polariseur d'entrée et un polariseur de sortie;
un élément combiné de diffuseur/polariseur réflectif, l'élément combiné de diffuseur/polariseur réflectif étant couplé au polariseur d'entrée du module d'affichage à cristaux liquides;
un film rotatif, le film rotatif étant couplé à une entrée de l'élément combiné de diffuseur/polariseur réflectif;
un guide de lumière, le guide de lumière présentant une surface d'entrée, une surface de sortie et une surface arrière;
une source de lumière, la source de lumière émettant des rayons lumineux incidents sur la surface d'entrée du guide de lumière, et dans laquelle le guide de lumière dirige les rayons lumineux à partir de la source de lumière, ceux-ci pénétrant dans le guide de lumière à la surface d'entrée pour sortir du guide de lumière à travers la surface de sortie d'une manière essentiellement uniforme;
un réflecteur couplé à la surface arrière du guide de lumière; et
dans lequel l'élément combiné de diffuseur/polariseur réflectif transmet les rayons lumineux présentant une première polarisation et réfléchit les rayons lumineux présentant une deuxième polarisation, lesdits rayons lumineux réfléchis étant réfléchis à travers le film rotatif et jusque dans le guide de lumière, et au moins une partie desdits rayons lumineux réfléchis étant réfléchis par le réflecteur à la surface arrière et ressortant du guide de lumière en présentant la première polarisation.

15. Dispositif d'affichage selon la revendication 14, dans lequel l'élément combiné de diffuseur/polariseur réflectif comprend un stratifié comprenant un diffuseur et un film polarisant réflectif.

16. Dispositif d'affichage selon la revendication 14, dans lequel l'élément combiné de diffuseur/polariseur réflectif comprend une structure diffusante formée dans une surface de sortie d'un film polarisant réflectif.

17. Dispositif d'affichage, comprenant:
un module d'affichage à cristaux liquides, le module d'affichage à cristaux liquides présentant un polariseur d'entrée et un polariseur de sortie;
un diffuseur, le diffuseur étant couplé au polariseur d'entrée du module d'affichage à cristaux liquides;
un élément combiné de film rotatif/polariseur réflectif, l'élément combiné de film rotatif/polariseur réflectif étant couplé à une entrée du diffuseur;
un guide de lumière, le guide de lumière présentant une surface d'entrée, une surface de sortie adjacente à l'élément combiné de film rotatif/polariseur réflectif, et une surface arrière;
une source de lumière, la source de lumière émettant des rayons lumineux incidents sur la surface d'entrée du guide de lumière, et dans laquelle le guide de lumière dirige les rayons lumineux à partir de la source de lumière, ceux-ci pénétrant dans le guide de lumière à la surface d'entrée pour sortir du guide de lumière à travers la surface de sortie d'une manière essentiellement uniforme;
un réflecteur couplé à la surface arrière du guide de lumière; et
dans lequel l'élément combiné de film rotatif/polariseur réflectif transmet les rayons lumineux présentant une première polarisation et réfléchit les rayons lumineux présentant une deuxième polarisation, lesdits rayons lumineux réfléchis étant réfléchis jusque dans le guide de lumière, et au moins une partie desdits rayons lumineux réfléchis étant réfléchis par le réflecteur à la surface arrière et ressortant du guide de lumière en présentant la première polarisation.

18. Dispositif d'affichage selon la revendication 17, dans lequel l'élément combiné de film rotatif/polariseur réflectif comprend un stratifié composé d'un film rotatif et d'un film polarisant réflectif.

19. Dispositif d'affichage selon la revendication. 17, dans lequel l'élément combiné de film rotatif/polariseur réflectif comprend des prismes rotatifs formés dans une surface d'entrée d'un polariseur réflectif.

20. Dispositif d'affichage, comprenant:
un module d'affichage à cristaux liquides, le module d'affichage à cristaux liquides présentant un polariseur d'entrée et un polariseur de sortie;
un élément combiné de diffuseur/film rotatif/polariseur réflectif, l'élément combiné de diffuseur/film rotatif/polariseur réflectif étant couplé au polariseur d'entrée du module d'affichage à cristaux liquides;
un guide de lumière, le guide de lumière présentant une surface d'entrée, une surface de sortie adjacente à l'élément combiné de diffuseur/film rotatif/polariseur réflectif, et une surface arrière;
une source de lumière, la source de lumière émettant des rayons lumineux incidents sur la surface d'entrée du guide de lumière, et dans laquelle le guide de lumière dirige les rayons lumineux à partir de la source de lumière, ceux-ci pénétrant dans le guide de lumière à la surface d'entrée pour sortir du guide de lumière à travers la surface de sortie d'une manière essentiellement uniforme;
un réflecteur couplé à la surface arrière du guide de lumière; et
dans lequel l'élément combiné de diffuseur/film rotatif/polariseur réflectif transmet les rayons lumineux présentant une première polarisation et réfléchit les rayons lumineux présentant une deuxième polarisation, lesdits rayons lumineux réfléchis étant réfléchis jusque dans le guide de lumière, et au moins une partie desdits rayons lumineux réfléchis étant réfléchis par le réflecteur à la surface arrière et ressortant du guide de lumière en présentant la première polarisation.

21. Dispositif d'affichage selon la revendication 20, dans lequel l'élément combiné de diffuseur/film rotatif/polariseur réflectif comprend un stratifié composé d'un diffuseur, d'un film rotatif et d'un film polarisant réflectif.

22. Dispositif d'affichage selon la revendication 20, dans lequel l'élément combiné de diffuseur/film rotatif/polariseur réflectif comprend des prismes rotatifs formés sur une surface d'entrée d'un polariseur réflectif, et une structure de diffuseur formée sur une surface de sortie du polariseur réflectif.

23. Procédé pour renforcer la luminosité dans un dispositif d'affichage selon l'une quelconque des revendications précédentes, le dispositif d'affichage comprenant un ensemble d'affichage à cristaux liquides et une source d'éclairage, la source d'éclairage comprenant un guide de lumière extrayant des rayons lumineux conformément au principe de réflexion interne totale à interférence, le procédé comprenant:
l'injection de rayons lumineux présentant une première orientation de polarisation et une deuxième orientation de polarisation dans le guide de lumière à une surface d'entrée;
la fourniture d'un élément optique combiné entre l'ensemble d'affichage à cristaux liquides et la source d'éclairage ;
l'utilisation dudit élément optique combiné pour:
(a) orienter les rayons lumineux sortant d'une surface de sortie du guide de lumière dans une direction essentiellement normale à la surface de sortie;
(b) transmettre les rayons lumineux présentant la première orientation de polarisation;
(c) réfléchir les rayons lumineux présentant la deuxième orientation de polarisation vers et essentiellement à travers le guide de lumière;
(d) randomiser l'orientation de polarisation desdits rayons lumineux réfléchis pour produire une partie desdits rayons lumineux présentant la première orientation de polarisation; et
(e) transmettre ladite partie de rayons lumineux.

24. Procédé selon la revendication 23, dans lequel l'étape de fourniture d'un élément optique combiné comprend la fourniture d'un polariseur réflectif entre l'ensemble d'affichage à cristaux liquides et la source d'éclairage.

25. Procédé selon la revendication 23, dans lequel l'étape de fourniture d'un élément optique combiné comprend la fourniture d'un élément combiné de film rotatif/polariseur réflectif entre l'ensemble d'affichage à cristaux liquides et la source d'éclairage.

26. Procédé selon la revendication 23, dans lequel l'étape de fourniture d'un élément optique combiné comprend la fourniture d'un élément combiné de diffuseur/polariseur réflectif entre l'ensemble d'affichage à cristaux liquides et la source d'éclairage.

27. Procédé selon la revendication 23, dans lequel l'étape de fourniture d'un élément optique combiné comprend la fourniture d'un élément combiné de diffuseur/film rotatif/polariseur réflectif entre l'ensemble d'affichage à cristaux liquides et la source d'éclairage.
